# EUROPÄISCHE PATENTSCHRIFT

(11) **EP 0 462 530 B1**
(45) Veröffentlichungstag und Bekanntmachung des Hinweises auf die Patenterteilung: **01.03.1995**
(21) Anmeldenummer: 91109842.4
(22) Anmeldetag: 15.06.1991
(51) Int. Cl.: F16L 55/162

(54) **Verfahren zum Abdichten eines Rohres mit einer Hülse**
Method for sealing a pipe with a sleeve
Méthode pour étancher un tuyau avec un manchon

(30) Priorität: 20.06.1990 DE 4019599
(43) Veröffentlichungstag der Anmeldung: 27.12.1991
(73) Patentinhaber: ABB Reaktor GmbH, D-68167 Mannheim (DE)
(72) Erfinder: Bäro, Günter, Dr., W-6940 Weinheim (DE); Russ, Jakob, W-6725 Römerberg 1 (DE)
(74) Vertreter: Rupprecht, Klaus, Dipl.-Ing.

(56) Entgegenhaltungen:
- WO-A-90/14548
- CH-A- 611 994
- US-A- 4 592 391

## Beschreibung

Die Erfindung betrifft ein Verfahren zum Abdichten einer Leckage eines Rohres mit einer metallischen Hülse, die mit Hilfe der Aufweittechnik an die Innenwandfläche des Rohres angelegt wird.

Eine derartige Hülse ist aus der EP-A-0 047 407 bekannt. Dort weist die Hülse in der Nähe ihres oberen und unteren Endes einen mit einer Zahnung versehenen Teilbereich auf. Nachdem in einem ersten Schritt durch hydraulische Aufweitung dieser Bereiche die Zahnung in die Rohrwand eingedrungen ist, wird in einem zweiten Schritt der zwischen den Zahnungen liegende Bereich ebenfalls hydraulisch aufgeweitet. Der dabei in axialer Richtung auftretende Schrumpfvorgang soll die Verbindung zwischen dem Rohr und der Hülse im Bereich der Verzahnung unterstützen. Abhängig von den Abmessungen des Rohres weist die metallische Hülse eine vorgebbare Wandstärke auf. Bei dem Aufweitvorgang entsteht auf Grund der unterschiedlichen elastischen Rückfederung der verformten Materialien, die unter anderem auf den unterschiedlichen Verformungswegen von Rohr und Hülse beruht, ein Spalt von ca. 5 bis 10 »m zwischen dem Rohr und der Hülse. Eine Leckage muß daher in geringen Mengen in Kauf genommen werden. Soll die Leckage vollständig unterbunden werden, ist seither die Verschweißung der Hülsenenden mit dem Rohr erforderlich.

Die Schweißung stellt eine Wärmebehandlung dar, die zu unerwünschten Spannungen führen kann und außerdem den Zeitaufwand der Rohrreparatur erhöht. Ferner sind Korrosionserscheinungen im Spalt nicht auszuschließen.

Es stellt sich die Aufgabe, ein Verfahren der eingangs genannten Art anzugeben, das eine Spaltbildung vermeidet und somit ohne Verschweißung eine leckagedichte Verbindung mit dem Rohr ermöglicht.

Gelöst wird diese Aufgabe erfindungsgemäß dadurch, daß die metallische Hülse aus mehreren Hülsenlagen zusammengesetzt wird, daß die Mantelfläche jeder Hülsenlage mit einer Oberflächenrauhheit von bis zu 0,1 mm Profiltiefe versehen wird, daß die Oberflächenhärte der Mantelflächen größer gewählt wird als die Oberflächenhärte des Rohres und der Innenumfangsfläche der einzelnen Hülsenlagen und daß die Hülsenlagen nacheinander in ihre Position gebracht und aufgeweitet werden.

Da die einzelnen Hülsenlagen dünnwandig ausgeführt sind, ist ein geringer Kraftaufwand beim Aufweiten erforderlich, so daß auf Grund der geringeren Rückfederung eine Spaltbildung unterbleibt. Die geringe Belastung wirkt sich besonders günstig beim Überbrücken von Leckagestellen aus, die in einem außerhalb des Rohrbodens liegenden Rohrbereich auftreten. Das Rohr kann dann trotz fehlender Abstützung durch den Rohrboden die Aufweitkräfte der einzelnen Hülsenlage kompensieren.

Die Oberflächenrauhigkeit bringt eine ausreichende Verbindung. Sie gräbt sich jedoch nur geringfügig in die weicheren Teile ein, so daß eine Schwächung der Rohrwandung bzw. der einzelnen Lagen nicht auftritt. Ferner bilden die härteren Schichten des Sandwichaufbaues mehrere Barrieren gegen Korrosionserscheinungen, so daß die Lebensdauer einer Leckageüberbrückung mit einer mehrlagig aufgebauten metallischen Hülse höher anzusetzen ist.

Anhand eines Ausführungsbeispieles und der schematischen Figuren 1 bis 3 wird das erfindungsgemäße Verfahren beschrieben.

Dabei zeigt
- Figur 1: einen Teilbereich eines Wärmetauschers,
- Figur 2: eine Einzelheit II der Figur 1 in einem größeren Maßstab und
- Figur 3: eine schrittweise Darstellung des Einbringens der einzelnen Lagen.

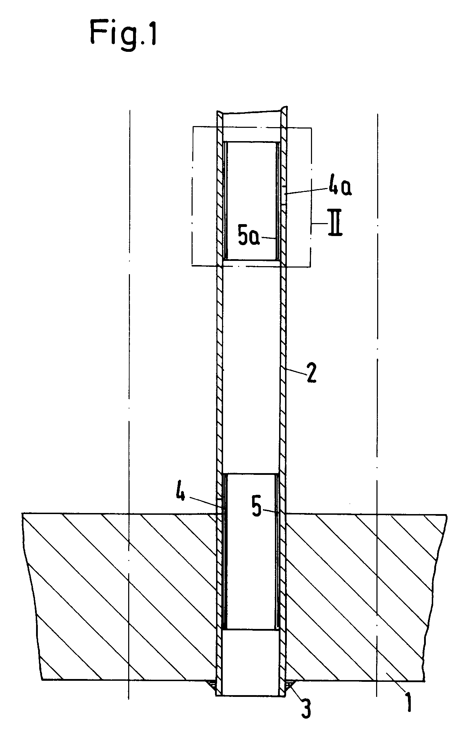

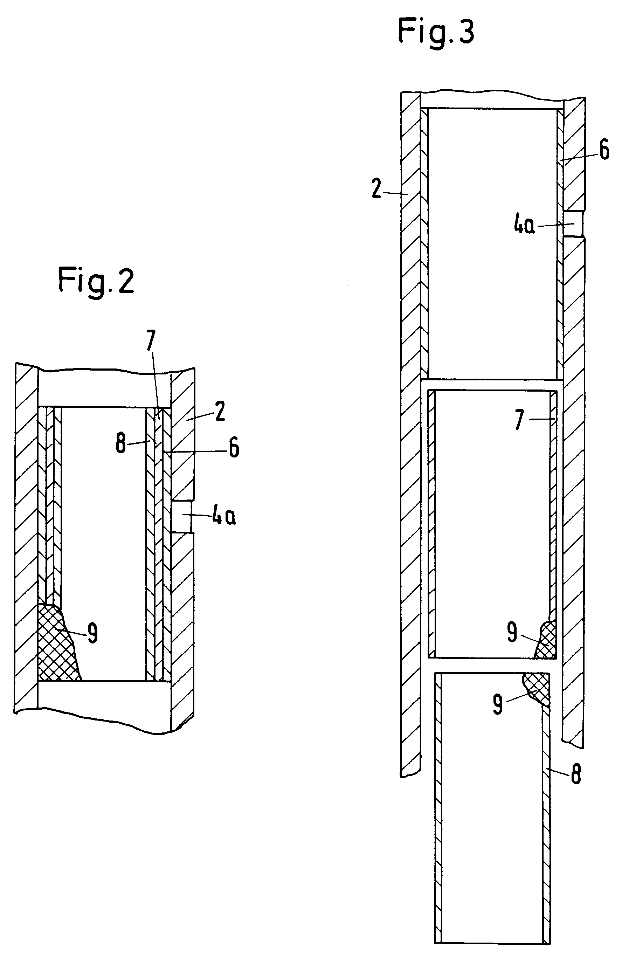

Die Figur 1 zeigt einen Teilbereich eines Rohrbodens 1 eines nicht weiter dargestellten Wärmetauschers. In dem Rohrboden enden eine Vielzahl von Rohren 2, die über eine Schweißnaht 3 gesichert sind. Aus Gründen der vereinfachten Darstellung ist lediglich ein Rohr 2 dargestellt. Werden bei der Prüfung des Wärmetauscherrohres Leckstellen 4, 4a festgestellt, so wird eine metallische Hülse 5, 5a zur Überbrückung der Leckstelle mit Hilfe einer bekannten Aufweittechnik in das Wärmetauscherrohr eingebracht. Die Wandstärke der metallischen Hülse wird in Abhängigkeit der Rohrabmessung bestimmt, so daß beispielsweise bei einem 7/8" (22,22 mm) Rohr eine Hülsenwandstärke von 1,2 mm vorgegeben ist. Zur Reduzierung der zur Aufweitung der Hülse erforderlichen Kräfte wird die Hülse 5, 5a aus mehreren Lagen 6, 7, 8 (Figur 2) gebildet, die bei dem angegebenen Beispiel eine Wandstärke von 0,4 mm aufweisen und somit zusammen die vorgegebene Wandstärke der metallischen Hülse 5, 5a von 1,2 mm besitzen.

Anhand der Fig. 2 wird die Reihenfolge des Einbringens der einzelnen Lagen erläutert. Nachdem eine die Lage 6 darstellende Buchse mit einer nicht dargestellten Aufweitvorrichtung an der Innenwand des Rohres 2 zur Anlage gebracht worden ist, wird eine die Lage 7 bildende Büchse in die Lage 6 eingeschoben und mit einer ebenfalls nicht dargestellten Aufweitvorrichtung an der Innenwand der Lage 6 zur Anlage gebracht. Letztendlich wird eine die Lage 8 bildende Büchse in die bereits positionierte Lage 7 eingeschoben und mit einer Aufweitvorrichtung an der Innenwand der Lage 7 zur Anlage gebracht. Zwischen den einzlenen Lagen besteht vor ihrer Aufweitung lediglich ein für das Einschieben erforderliches geringes Spiel von maximal 0,05 mm , um beim Aufweiten eine frühzeitige Anlage zu erzielen. Die Mantelflache jeder Lage ist mit einer Profilierung 9 versehen, deren Profiltiefe maximal 0,1 mm beträgt. Die Mantelflächen weisen eine größere Oberflächenhärte auf, als die Rohrinnenwand bzw. als die Innenumfangsfläche der jeweiligen Lage. Mit der relativ geringen Oberflächenrauhheit gelingt zusammen mit der leichten Verformbarkeit der einzelnen Lagen eine formschlüssige Verbindung einer Lage mit dem Rohr 2 bzw. der einzelnen Lagen untereinander.

## Patentansprüche

1. Verfahren zum Abdichten einer Leckage eines Rohres (2) mit einer metallischen Hülse (5, 5a), die mit Hilfe der Aufweittechnik an die Innenwandfläche des Rohres angelegt wird, **dadurch gekennzeichnet,** daß die metallische Hülse (5, 5a) aus mehreren Hülsenlagen (6, 7, 8) zusammengesetzt wird, daß die Mantelfläche jeder Hülsenlage mit einer Oberflächenrauheit von bis zu 0,1 mm Profiltiefe versehen wird, daß die Oberflächenhärte der Mantelflächen größer gewählt wird als die Oberflächenhärte des Rohres und der Innenumfangsfläche der einzelnen Hülsenlagen und daß die Hülsenlagen nacheinander in ihre Posiition gebracht und aufgeweitet werden.

## Claims

1. Process for sealing a leakage in a tube (2) by means of a metallic sleeve (5, 5a) which is laid on the inner wall surface of the tube with the aid of an expansion method, characterized in that the metallic sleeve (5, 5a) is made up of a plurality of sleeve layers (6, 7, 8), in that the outer surface of each sleeve layer is provided with a surface roughness having a profile depth of up to 0.1 mm, in that the surface hardness of the outer surfaces is selected to be greater than the surface hardness of the tube and of the inner circumferential surface of the individual sleeve layers, and in that the sleeve layers are brought into their position, and expanded, one after the other.

## Revendications

1. Procédé de réparation d'une fuite dans un tube (2) au moyen d'un manchon métallique (5, 5a) qui, par une technique d'expansion est appliqué contre la surface intérieure du tube, caractérisé par le fait que le manchon métallique (5, 5a) se compose de plusieurs couches (6, 7, 8), par le fait que la surface-extérieure de chaque couche du manchon présente une rugosité de surface avec une profondeur de profil de rugosité allant jusqu'à 0,1 mm, par le fait que l'on choisit la dureté superficielle des surfaces extérieures superieure à la dureté superficielle des surfaces intérieures des différentes couches du manchon et par le fait que l'on met en place successivement les couches du manchon et on les élargit..
